# EUROPÄISCHE PATENTANMELDUNG

(11) **EP 2 400 231 A2**
(43) Veröffentlichungstag der Anmeldung: **28.12.2011**
(21) Anmeldenummer: 11168884.2
(22) Anmeldetag: 07.06.2011
(51) Int. Cl.: F24F 5/00, F24F 12/00

(54) **Verfahren zum Betrieb einer Sorptionswärmetauscheranlage und Sorptionswärmetauscheranlage hierfür**

(30) Priorität: 22.06.2010 DE 102010024624
(71) Anmelder: Robert Bosch GmbH, 70442 Stuttgart (DE)
(72) Erfinder: Danne, Thomas, 71634 Ludwigsburg (DE)

(57) **Zusammenfassung**

Die Erfindung betrifft ein Verfahren zum Betrieb einer offenen Sorptionswärmetauscheranlage (10) mit mindestens zwei Sorptionswärmetauschern (11a, 11b), wobei die Sorptionswärmetauscher (11) wechselweise in einem Konditionierungsmodus und einem Regenerationsmodus betrieben werden, um eine quasikontinuierliche Konditionierung eines Luftstroms durchzuführen und der Luftstrom zumindest teilweise in Kontakt mit einem festen Trocknungsmittel (12) gebracht wird. Die Erfindung betrifft weiterhin eine Sorptionswärmetauscheranlage (10).

Es ist eine Aufgabe der Erfindung, ein Verfahren zum Betrieb einer Sorptionswärmetauscheranlage und eine Sorptionswärmetauscheranlage zu schaffen, die eine verbesserte Konditionierung einer Frischluft mittels eines festen Trocknungsmittels gewährleistet.

Gekennzeichnet ist das Verfahren durch die folgenden Schritte: Trocknen und Kühlen eines Außenluftteilstroms (A), Zuführen des Außenluftteilstroms (A) in eine zu klimatisierende Umgebung, weiteres Kühlen mittels einer aus der zu klimatisierenden Umgebung abzuführenden Abluft (Ab), Erhitzen und Regenerieren eines zweiten Sorptionswärmetauschers (11 b). Gekennzeichnet ist die Sorptionswärmetauscheranlage (10) dadurch, dass ein festes Trocknungsmittel (12) zum Trocknen eines Luftstroms umfasst ist.

## Beschreibung

Die Erfindung betrifft ein Verfahren zum Betrieb einer offenen Sorptionswärmetauscheranlage, insbesondere einer offenen Sorptionswärmetauscheranlage zur Konditionierung von Frischluft, nach dem Oberbegriff des Anspruchs 1.

Weiterhin betrifft die Erfindung eine Sorptionswärmetauscheranlage, insbesondere eine offene Sorptionswärmetauscheranlage zur Konditionierung von Frischluft, mit mindestens zwei Sorptionswärmetauschern nach dem Oberbegriff des Anspruchs 5.

Es sind verschiedene Verfahren zur thermisch angetriebenen Klimatisierung eines Luftstroms und Vorrichtungen hierfür bekannt. Allgemein wird dabei zwischen offenen und geschlossenen Verfahren unterschieden. Offene Verfahren werden meist in speziellen raumlufttechnischen Anlagen eingesetzt, wobei ein Trocknungsmittel verwendet wird, um die zu klimatisierende Gebäudezuluft zu trocknen. Mittels thermischer Energie wird das Trocknungsmittel, welches die Feuchtigkeit des zu klimatisierenden Luftstroms aufgenommen hat, anschließend wieder regeneriert, das heißt getrocknet. Um den Luftstrom abzukühlen, werden direkte und indirekte Verdunstungskühlungen genutzt. Dabei sind grundsätzlich flüssige aber auch feste Trocknungsmittel einsetzbar. Vorteilhaft für den Gesamtprozess ist eine Kühlung des Trocknungsmittels während der stattfindenden Trocknung der Luft. Ein wesentlicher Nachteil beim Einsatz von festen Trocknungsmitteln ist, dass diese Kühlung technisch bisher nur sehr aufwendig zu realisieren ist.

Beispielsweise beschreibt die EP 1 890 088 A1 einen Luftentfeuchter zum Entfeuchten eines Luftstroms. Der Luftentfeuchter umfasst einen Wasserkreislauf, wobei mittels eines Schalters der Wasserkreislauf zwischen einem ersten Kreislaufzustand, in welchem heißes Wasser, das durch einen ersten Einlass hinein fließt, einen ersten Wärmetauscher durchfließt und zu einem ersten Auslass hinaus fließt, und in welchem kaltes Wasser, das durch einen zweiten Einlass hinein fließt, einen zweiten Wärmetauscher durchfließt und zu einem zweiten Auslass hinaus fließt, und einem zweiten Kreislaufzustand, in dem das heiße Wasser, das durch den ersten Einlass hinein fließt, den zweiten Wärmetauscher durchfließt und zum ersten Auslass hinaus fließt, und in welchem das kalte Wasser, das durch den zweiten Einlass hinein fließt, den ersten Wärmetauscher durchfließt und zum zweiten Auslass hinaus fließt, umgeschaltet wird. Zusätzlich umfasst der Wasserkreislauf einen Bypassweg, um die Einlässe mit den Auslässen zu verbinden beziehungsweise den Wasserfluss durch diese zu ermöglichen. Mittels des Bypasswegs fließen das kalte Wasser und das heiße Wasser sicher von dem jeweiligen Einlass zum jeweiligen Auslass, auch falls die jeweiligen Dreiwegeventile zwischen den Ein- und Auslässen fehlerhaft arbeiten.

Aus der vorstehend genannten Patentanmeldung ist eine Vorrichtung bekannt, bei der Au-βenluft über ein mit einem Trocknungsmittel beschichteten Wasser/Luft-Wärmetauscher geführt wird, um diese zu trocknen. Der Wärmetauscher wird dabei durch kaltes Wasser gekühlt, um die Außenluft sowohl zu trocknen als auch zu kühlen und derart konditioniert dem Raum als Zuluft zuzuführen. Die Raumabluft wird einem zweiten mit einem Trocknungsmittel beschichteten Wasser/Luft-Wärmetauscher zugeführt, um das Trocknungsmittel wieder zu trockenen. Zu diesem Zweck wird der zweite Wärmetauscher mit heißem Wasser durchströmt. Die Luft wird erwärmt und befeuchtet und als Fortluft abgeführt. Das Trocknungsmittel wird dabei getrocknet. Dieser Prozess läuft quasikontinuierlich ab, also wechselweise ab. Dabei zeichnet sich die bekannte Lösung durch die spezielle Verschaltung der wasserführenden Rohre aus.

Klarer Nachteil einer solchen Klimatisierungseinheit ist, dass das kalte Wasser zur Konditionierung (Trocknen und Kühlen) des Luftstroms von einer weiteren Komponente bereitgestellt werden muss. Dies geschiet im Allgemeinen mittels Kompressionskältemaschinen, welche einen hohen elektischen Energiebedarf haben.

Der vorliegenden Erfindung liegt die Aufgabe zugrunde, ein Verfahren zum Betrieb einer Sorptionswärmetauscheranlage und eine Sorptionswärmetauscheranlage zu schaffen, die eine verbesserte Konditionierung, das heißt Entfeuchtung und Temperierung (Anpassen bzw. Ändern der Temperatur durch Kühlung oder Erwärmung), einer Frischluft mittels eines festen Trocknungsmittels gewährleistet, wobei keine externe Kältemaschine benötigt wird.

Erfindungsgemäß wird dies durch Gegenstände mit den Merkmalen des Patentanspruches 1 und des Patentanspruchs 5 gelöst. Vorteilhafte Weiterbildungen sind den Unteransprüchen zu entnehmen.

Bei einem erfindungsgemäßen Verfahren zum Betrieb einer offenen Sorptionswärmetauscheranlage, insbesondere einer offenen Sorptionswärmetauscheranlage zur Konditionierung von Frischluft, mit mindestens zwei Sorptionswärmetauschern, wobei die Sorptionswärmetauscher wechselweise in einem Konditionierungsmodus (das bedeutet vorliegend die Einstellung bzw. Änderung der Feuchtigkeit und Temperatur der Außenluft bzw. Zuluft) und einem Regenerationsmodus (das bedeutet vorliegend die Austreibung der Feuchtigkeit aus dem Sorptionswärmetauscher) betrieben werden, um eine quasikontinuierliche Konditionierung eines Luftstroms durchzuführen, und der Luftstrom zumindest teilweise in Kontakt mit einem festen Trocknungsmittel gebracht wird, sind die folgenden Schritte vorgesehen: Kühlen eines ersten Sorptionswärmetauschers (11a) mittels eines in mindestens einem Kreislauf umgewälzten flüssigen Temperiermittels (21), wobei das Trocknungsmittel (12) gekühlt wird, Trocknen und Kühlen zumindest eines ersten Außenluftteilstroms in dem ersten Sorptionswärmetauscher, Zuführen des getrockneten und gekühlten ersten Außenluftteilstroms als Zuluftstrom in eine zu klimatisierende Umgebung, weiteres Kühlen des Zuluftstroms mittels eines aus der zu klimatisierenden Umgebung abzuführenden Abluftstroms, Erhitzen eines zweiten Sorptionswärmetauschers mittels eines in dem mindestens einen Kreislauf umgewälzten flüssigen Temperiermittels, wobei das Trocknungsmittel erhitzt wird, Regenerieren des erhitzten zweiten Sorptionswärmetauschers, wobei ein durch die Erwärmung des Trocknungsmittels freigesetzter Wasserdampf von einem zweiten Au-βenluftteilstrom aufgenommen und als Fortluftstrom fortgeführt wird, und Kühlen des Temperiermittels in einem Nasskühlturm mit Hilfe des Abluftstroms oder eines weiteren Außenluftteilstroms. Dabei wechseln sich die Betriebsmodi Konditionierung und Regeneration der Sorptionswärmetauscher phasenweise ab, wodurch es zu der quasikontinuierlichen Frischluftkonditionierung kommt.

In einer vorteilhaften Ausführungsform des erfindungsgemäßen Verfahrens ist vorgesehen, dass der Außenluftteilstrom das feste Trocknungsmittel anströmt, wobei der Außenluftteilstrom in Abhängigkeit der Temperatur des Sorptionswärmetauschers bzw. des Trocknungsmittels seine Feuchtigkeit an das Trocknungsmittel abgibt oder die Feuchtigkeit des Trocknungsmittels aufnimmt.

In einer anderen vorteilhaften Ausführungsform des erfindungsgemäßen Verfahrens ist vorgesehen, dass die Außenluftteilströme und/oder die Trocknungsmittel mittels mindestens eines flüssigen Temperiermittels temperiert werden.

Bevorzugt wird der Sorptionswärmetauscher, kurz bevor er wieder zur Konditionierung verwendet wird, mit Hilfe eines Temperiermittels (das kann das für Konditionierung und/oder Regeneration verwendete Temperiermittel, aber auch ein in einem separaten Kreislauf vorliegendes Kühlwasser sein) in einer zusätzlichen Zwischenkühlphase wieder auf eine für die Adsorption benötige Temperatur gekühlt. In dieser Zeit wird der Wärmeübertrager nicht von Luft durchströmt. Diese Zwischenkühlphase im Regenerationsmodus ist optional.

Bei einer erfindungsgemäßen Sorptionswärmetauscheranlage, insbesondere eine offene Sorptionswärmetauscheranlage zur Konditionierung von Frischluft, mit mindestens zwei Sorptionswärmetauschern, wobei die Sorptionswärmetauscher wechselweise in einem Konditionierungsmodus und einem Regenerationsmodus betrieben werden, um eine quasikontinuierliche Konditionierung eines Luftstroms durchzuführen, sind ein festes Trocknungsmittel zum Trocknen eines Luftstroms in den mindestens zwei Sorptionswärmetauschern, mindestens ein in mindestens einem Kreislauf umgewälztes flüssiges Temperiermittel zum Temperieren der Sorptionswärmetauscher und/oder eines Luftstroms und/oder des Trocknungsmittels, und ein Nasskühlturm zum Kühlen des Temperiermittels mit Hilfe des Abluftstroms oder eines weiteren Außenluftteilstroms vorgesehen.

Im Konditionierungsmodus müssen die Sorptionswärmetauscher gekühlt, im Regenerationsmodus erwärmt werden. Für die Kühlung und Erwärmung kann ein gemeinsames Temperiermittel, dessen Temperatur der jeweiligen Aufgabe entsprechend angepasst wird, verwendet werden. Dieses kann dann durch einen zumindest teilweise gemeinsam benutzten Kreislauf umgewälzt werden. Für Kühlung und Erwärmung können auch zwei verschiedene Temperiermittel Verwendung finden, diese können in zwei verschiedenen Kreisläufen oder auch in einem zumindest teilweise gemeinsam benutzten Kreislauf umgewälzt werden.

In einer vorteilhaften Ausführungsform der erfindungsgemäßen Sorptionswärmetauscheranlage ist vorgesehen, dass das mindestens eine feste Trocknungsmittel als Beschichtung jeweils in zumindest einem Bereich der mindestens zwei Sorptionswärmetauscher ausgebildet ist. Die Sorptionswärmetauscher sind vorzugsweise mit demselben Trocknungsmittelmaterial beschichtet.

In einer anderen vorteilhaften Ausführungsform der erfindungsgemäßen Sorptionswärmetauscheranlage ist vorgesehen, dass eine Temperiervorrichtung mit mindestens zwei Temperiermittelspeichervorrichtungen zum Bevorraten des mindestens einen Temperiermittels vorgesehen ist, um mindestens zwei unterschiedliche Temperaturen bereitzustellen.

In einer anderen vorteilhaften Ausführungsform der erfindungsgemäßen Sorptionswärmetauscheranlage ist vorgesehen, dass der Sorptionswärmetauscher einen mit festem Trocknungsmittel beschichteten Strömungskanal für die Durchleitung des Außenluftteilstroms (A) und einen Strömungskanal für die Durchleitung mindestens eines ersten Temperiermittels aufweist. Darüber hinaus kann der Sorptionswärmetauscher optional einen Strömungskanal für die Durchleitung eines zweiten Temperiermittels umfassen. Die Strömungskanäle stehen in wärmeleitender Verbindung miteinander.

In einer weiteren vorteilhaften Ausführungsform der erfindungsgemäßen Sorptionswärmetauscheranlage ist vorgesehen, dass das mindestens eine flüssige Temperiermittel Wasser oder eine Wasser-Glykol-Mischung umfasst.

In noch einer weiteren vorteilhaften Ausführungsform der erfindungsgemäßen Sorptionswärmetauscheranlage ist vorgesehen, dass ein indirekter Verdunstungskühler zum weiteren Abkühlen des Zuluftstroms durch einen Abluftstrom vorgesehen ist.

In noch einer weiteren vorteilhaften Ausführungsform der erfindungsgemäßen Sorptionswärmetauscheranlage ist vorgesehen, dass eine Umschaltvorrichtung vorgesehen ist, um die Luft- und/oder Wasserströme zwischen den Sorptionswärmetauschern und damit zwischen den beiden Betriebsmodi abwechselnd umzuschalten.

Mit dem erfindungsgemäßen Verfahren zum Betrieb einer offenen Sorptionswärmetauscheranlage und mit der erfindungsgemäßen Sorptionswärmetauscheranlage werden insbesondere die folgenden Vorteile realisiert:
Die Regeneration der beschichteten Wärmetauscher wird mittels eines Außenluftstroms durchgeführt. Die Abluft wird erfindungsgemäß zur weiteren Kühlung des Zuluftstroms im indirekten Verdunstungskühler genutzt. Weiterhin wird die Abluft nach dem Durchlaufen des indirekten Verdunstungskühlers zur Kühlung von Wasser in einem Wasserkreislauf eingesetzt. Das kalte Wasser zur Kühlung der Sorptionsanlage wird aus einem separaten Kreislauf zur Verfügung gestellt. Der indirekte Verdunstungskühler besitzt einen eigenen Wasserkreislauf, der nicht mit dem Kühlmittelkreis verbunden ist.

Erfindungsgemäß werden die Sorptionswärmetauscher wechselweise in einem Konditionierungsmodus und einem Regenerationsmodus betrieben. Das heißt, dass in einem Sorptionswärmetauscher eine Konditionierung eines Luftstroms durchgeführt wird, während ein anderer Sorptionswärmetauscher regeneriert wird, und umgekehrt. Die Konditionierung des Luftstroms umfasst dessen Trocknung und Kühlung. Die Regeneration eines Sorptionswärmetauschers umfasst dessen Trocknung.

Sowohl im Konditionierungsmodus als auch im Regenerationsmodus strömt zumindest ein Außenluftteilstrom vorteilhaft durch die beschichteten Wärmetauscher. Je nach der Temperatur und dem Feuchtigkeitsgehalt des Trocknungsmittels und dem Feuchtigkeitsgehalt des Außenluftteilstroms nimmt das Trocknungsmittel die Feuchtigkeit des umströmenden Au-βenluftteilstroms auf oder gibt seine Feuchtigkeit an den Außenluftteilstrom ab. Während des Regenerationsmodus' muss das Trocknungsmittel also vorteilhaft erhitzt werden, wohingegen es im Konditionierungsmodus vorteilhaft gekühlt werden muss. Als Trocknungsmittel sind beispielsweise Silikagel oder Zeolith verwendbar.

In einer Ausführungsform ist der Sorptionswärmetauscher in von Luft bzw. von Wasser durchströmbare Teilbereiche gegliedert. In den von Luft durchströmbaren Teilbereichen ist vorteilhafterweise die Beschichtung mit dem festen Trocknungsmittel angebracht. Der Sorptionswärmetauscher wird während des Konditionierungsmodus in dem von Wasser durchströmbaren Bereich von kaltem Wasser durchströmt. So wird sowohl der Sorptionsprozess als auch teilweise die Luft gekühlt.

Eine Kühlung des Trocknungsmittels der Sorptionswärmetauscher wird vorteilhafterweise während des Sorptionsprozesses durchgeführt, um die beim Sorptionsprozess entstehende Sorptionswärme abzuführen. Durch die Kühlung wird die Sorptionsfähigkeit, verglichen mit ungekühlter Sorption, signifikant gesteigert. Es ist folglich vorgesehen, die frei werdende Sorptionswärme zeitgleich mit dem Sorptionsprozess abzuführen, um ein Ansteigen der Temperatur von Luft und Trocknungsmittel zu vermeiden. Durch das Abführen der Sorptionswärme wird die nachfolgende sensible Abkühlung des umströmenden Luftstroms erleichtert. Durch die Kühlung wird der Gesamtprozess bei im Vergleich zu herkömmlichen Sorptionswärmetauschern mit einem flüssigen Trocknungsmittel oder Sorptionsvorrichtungen ohne Kühlung niedrigeren Regenerationstemperaturen realisiert.

Ein weiterer Vorteil gegenüber einem bekannten Verfahren mittels beschichteter Luft/Luft-Wärmetauscher (siehe EP 1 508 015 B1) ist der verbesserte Wärmeübergang. Das Abführen der Sorptionswärme wird dadurch erleichtert, dass der Wärmeübergangskoeffizient von Trocknungsmittel auf Wasser signifikant höher ist als der Wärmeübergangskoeffizient von Trocknungsmittel zu Luft.

Das durch den einen Bereich des Sorptionswärmetauschers durchströmende kalte Wasser wird von einem Kühlturm, welcher im Gerät integriert ist, bereitgestellt. Der so getrocknete und vorgekühlte Außenluftteilstrom wird dann in einem indirekten Verdunstungskühler weiter sensibel abgekühlt und dem Gebäude als Zuluft zugeführt. Die Gebäudeabluft wird durch die befeuchtete Seite des indirekten Verdunstungskühlers geführt. Anschließend wird die Abluft im Kühlturm zur Abkühlung des Kühlwassers genutzt und danach fort geführt. Der Kühlturm ist je nach Klima im Einsatzgebiet auch mit Außenluft statt befeuchteter Abluft betreibbar.

Im wechselweise durchgeführten Regenerationsmodus wird die aus dem Außenluftteilstrom in das Trocknungsmittel adsorbierte Feuchtigkeit vorteilhafterweise wieder ausgetrieben. Während dieser Phase wird der Sorptionswärmetauscher mit Hilfe von heißem Wasser aus einem angeschlossenen Warmwasserspeicher durchströmt. Der Außenluftteilstrom wird durch den beschichteten Bereich geführt und anschließend fortgeführt, um das frei werdende Wasser aus dem Trocknungsmittel fortzutragen.

Der Warmwasserspeicher kann durch verschiedene Wärmeerzeuger gespeist werden. Vorteilhaft sind hierbei günstige Wärmequellen welche Wärme auf einem Temperaturniveau von ca. 55-75°C bereitstellen, wie etwa solarthermische Kollektoren oder industrielle Abwärme.

Um diese beiden Betriebsmodi zu realisieren, ist in einer vorteilhaften Ausführungsform der Sorptionswärmetauscheranlage eine Umschaltvorrichtung ausgeführt. Diese Umschaltvorrichtung umfasst bevorzugt eine Vielzahl von verschiedenen Lüftungsklappen und Ventilen, die die Luft- und Wasserströme entsprechend leiten. Die Klappen zur Umleitung der Luftströme sind in einer Ausführungsform als Zweiwegeklappen ausführbar. Die Wasserventile zum Umleiten der Wasserkreisläufe sind in einer Ausführungsform als Zweiwegeventile ausführbar. Dabei werden vorteilhafterweise weniger Luftklappen benötigt als im Vergleich zum bekannten Verfahren mittels beschichteter Luft/Luft-Wärmetauscher. Die im Gegenzug benötigten Wasserventile sind jedoch signifikant kleiner, schneller und kostengünstiger. Daraus ergeben sich weitere Vorteile hinsichtlich eingesparten Bauraums, der vereinfachten Prozessführung und den Herstellungskosten.

Beispielsweise ist eine erfindungsgemäß definierte Leitung des Außenluftteilstroms vorgesehen. Während der Konditionierung wird der Außenluftteilstrom nach dem Durchströmen des Sorptionswärmetauschers dem indirekten Verdunstungskühler zugeführt. Dahingegen wird der Außenluftteilstrom während der Regeneration als Fortluftstrom fortgeführt. Der mit Wasser durchströmte Bereich des Sorptionswärmetauschers ist vorteilhafterweise an Schaltelemente wie die Wasserventile angeschlossen, damit je nach Betriebszustand hei-βes oder kaltes Wasser den Sorptionswärmetauscher durchströmt.

Weiterhin liegt es im Rahmen der Erfindung, die mit einem Trocknungsmittel beschichteten Wärmeübertrager im Gegenstromprinzip aufzubauen, um eine höhere Leistung zu übertragen. Prinzipiell sind das Verfahren und/oder die Sorptionswärmetauscheranlage auch mit mehr als zwei Wärmetauschern ausführbar. Des Weiteren ist der indirekte Verdunstungskühler auch als Wärmetauscher nach dem Gegenstromprinzip ausführbar.

Der Gegenstand der vorliegenden Erfindung umfasst die Anwendung von beschichteten Wasser/Luft-Wärmetauschern, welche zum Beispiel als Rohr/Rippe-Wärmetauscher ausgeführt sind, zur Realisierung einer offenen gekühlten Feststoffsorption zum Zweck der thermisch angetriebenen Klimatisierung.

Durch die gekühlte Sorption ergeben sich prozesstechnische Vorteile wie etwa eine niedrige Antriebstemperatur von ca. 55-75°C, verglichen mit der ungekühlten Sorption im Stand der Technik. Durch den Einsatz der aus geschlossenen Sorptionsverfahren bekannten beschichteten Luft/Wasser-Wärmetauschern ist eine kompakte Bauweise realisierbar. Im Gegensatz zu bisherigen Ansätzen zur gekühlten Feststoffsorption bietet die Erfindung signifikante Vorteile mit Blick auf einfache technische Umsetzung. Des Weiteren sind im Rahmen der Erfindung vorteilhafterweise auch kleinere Volumenströme etwa im Bereich von 250-450m³/h, wie sie üblicherweise für einen Bedarf bei Einfamilienhäusern anfallen, temperierbar. Dies ist bei den herkömmlichen Verfahren aufgrund der dort vorhandenen großen Leckströme unvorteilhaft.

Als ein weiterer Vorteil ist noch zu nennen, dass die Gebäudezuluft nicht direkt befeuchtet werden muss, um auf die erforderliche Zulufttemperatur abgekühlt zu werden. Dies hat hygienische Vorteile. Es liegt keine Gefahr der Kontaminierung der Zuluft durch Bakterien wie etwa Legionellen, vor.

Die Zeichnungen stellen ein Ausführungsbeispiel der Erfindung dar und zeigen in den Figuren:
- Fig. 1: ein schematisches Blockschaltbild einer erfindungsgemäßen Sorptionswärmetauscheranlage, und
- Fig. 2: ein qualitatives h-x-Diagramm des erfindungsgemäßen Verfahrens.

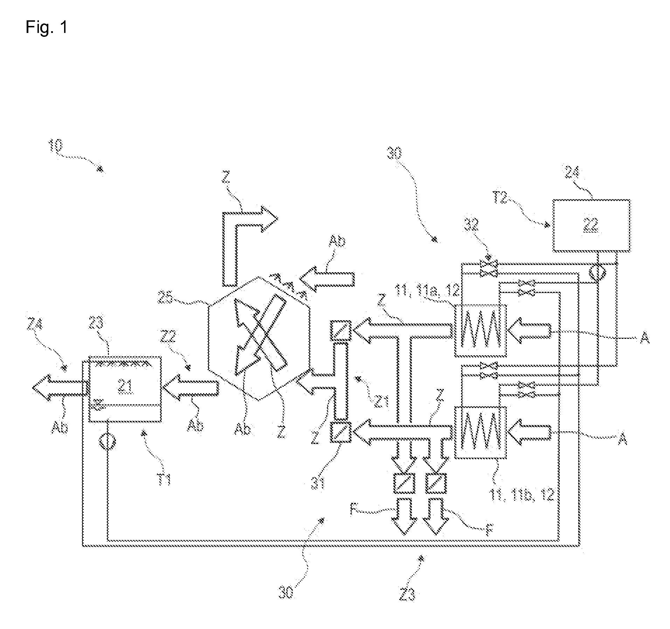

Die Fig. 1 zeigt ein schematisches Blockschaltbild einer erfindungsgemäßen Sorptionswärmetauscheranlage 10. Bei der Sorptionswärmetauscheranlage 10 handelt es sich um eine offene Sorptionswärmetauscheranlage zur Konditionierung von Frischluft.

Die Sorptionswärmetauscheranlage 10 umfasst zwei Sorptionswärmetauscher 11, einen ersten Sorptionswärmetauscher 11a und einen zweiten Sorptionswärmetauscher 11b. Die Sorptionswärmetauscher 11 werden wechselweise in einem Konditionierungsmodus und einem Regenerationsmodus betrieben werden, um eine quasikontinuierliche Konditionierung eines Luftstroms durchzuführen. Weiterhin umfassen die Sorptionswärmetauscher 11 ein festes Trocknungsmittel 12 zum Trocknen des Luftstroms in den zwei Sorptionswärmetauschern 11a und 11b und zwei flüssige Temperiermittel 21 und 22 zum Temperieren des Luftstroms und/oder des Trocknungsmittels 12.

Das feste Trocknungsmittel 12 liegt als Beschichtung jeweils in zumindest einem Bereich der zwei Sorptionswärmetauscher 11 a und 11b vor.

Des Weiteren umfasst die Sorptionswärmetauscheranlage 10 eine Temperiervorrichtung mit zwei Temperiermittelspeichervorrichtungen 23 und 24 zum Bevorraten der zwei Temperiermittel 21 und 22. Durch die zwei Temperiermittel 21 und 22 werden zwei unterschiedliche Temperaturen T1 und T2 bereitgestellt. In der Ausführungsform nach Fig. 1 ist die Temperatur T1 des einen Temperiermittels 21 kälter als die Temperatur T2 des anderen Temperiermittels 22. Die zwei flüssigen Temperiermittel 21 und 22 sind als Wasser oder eine Wasser-Glykol-Mischung ausgebildet. Die Temperiermittelspeichervorrichtung 23 für das kältere Temperiermittel 21 ist als Kühlturm ausgebildet. Die Temperiermittelspeichervorrichtung 24 für das wärmere Temperiermittel 22 ist als Warmwasserspeicher ausgebildet.

Weiterhin umfasst die Sorptionswärmetauscheranlage 10 einen indirekten Verdunstungskühler 25. Des Weiteren weist die Sorptionswärmetauscheranlage 10 eine Umschaltvorrichtung 30 auf. Die Umschaltvorrichtung 30 umfasst mehrere Klappen 31 und Ventile 32.

Die erfindungsgemäße Sorptionswärmetauscheranlage 10 ist mit dem erfindungsgemäßen Verfahren betreibbar. Das erfindungsgemäße Verfahren zum Betrieb einer offenen Sorptionswärmetauscheranlage 10 mit zwei Sorptionswärmetauschern 11a 11 b umfasst ein Trocknen und Kühlen eines Außenluftteilstroms A in einem ersten Sorptionswärmetauscher 11a. Weiterhin umfasst das Verfahren ein Zuführen des getrockneten und gekühlten Au-βenluftteilstroms A als Zuluftstrom Z in eine zu klimatisierende Umgebung. Es umfasst weiterhin ein weiteres Kühlen des Zuluftstroms Z mittels einer aus der zu klimatisierenden Umgebung abzuführenden Abluft Ab. Als nächsten Schritt umfasst das Verfahren ein Erhitzen eines zweiten Sorptionswärmetauscher 11b. Schlußendlich umfasst das Verfahren noch ein Regenerieren des erhitzten zweiten Sorptionswärmetauschers 11b. Dabei wird ein durch die Erwärmung des Trocknungsmittels 12 freigesetzter Wasserdampf von einem Außenluftteilstrom A aufgenommen und als Fortluftstrom F fortgeführt wird.

Der Außenluftteilstrom A strömt das feste Trocknungsmittel 12 an. Dabei gibt der Außenluftteilstrom A seine Feuchtigkeit an das Trocknungsmittel 12 ab oder der Außenluftteilstrom nimmt die Feuchtigkeit des Trocknungsmittels 12 auf. Die beschichtete Seite der Sorptionswärmetauscher 11 wird von dem Außenluftteilstrom A durchströmt, während die nicht beschichtete Seite von Wasser durchströmt wird. In der Ausführung der Fig. 1 sind die Sorptionswärmetauscher 11als Rohr/Rippe-Wärmetauscher ausgeführt.

Die beiden Sorptionswärmetauscher 11a und 11 b werden abwechselnd zur Konditionierung, also Trocknung und Kühlung des Außenluftteilstroms A genutzt, während der jeweils andere Sorptionswärmetauscher 11a bzw. 11 b regeneriert wird. Die Trocknung und Kühlung findet also quasikontinuierlich im Batch-Betrieb statt.

Im Konditionierungsmodus strömt der Außenluftteilstrom A durch den beschichten Bereich des einen Sorptionswärmetauscher 11a, wobei der Außenluftteilstrom A getrocknet wird, da das Trocknungsmittel 12 Feuchtigkeit aus der Luft adsorbiert. Der Sorptionswärmetauscher 11a wird während dieser Phase auf der Wasserseite von einem Temperiermittel 21 mit einer niedrigen Temperatur T1 durchströmt. So wird sowohl der Sorptionsprozess als auch teilweise die Luft gekühlt. Das kalte Wasser wird aus einer Temperiermittelspeichervorrichtung 23, welche in der Sorptionswärmetauscheranlage 10 integriert ist, bereitgestellt. Der so getrocknete und vorgekühlte Außenluftteilstrom A wird dann in einen indirekten Verdunstungskühler 25 geführt (Zustand Z1) und weiter sensibel abgekühlt und dem Gebäude als Zuluft Z zugeführt.

Im Regenerationsmodus wird die Feuchtigkeit aus dem Trocknungsmittel 12 ausgetrieben. Während dieser Phase wird der Sorptionswärmetauscher 11 b mit Hilfe von heißem Wasser aus dem Warmwasserspeicher durchströmt. Ein Außenluftteilstrom A wird durch die mit Trocknungsmittel 12 beschichtete Seite geführt und anschließend fortgeführt, um die frei werdende Feuchtigkeit aus dem Trocknungsmittel 12 fortzutragen. Kurz bevor der Sorptionswärmetauscher 11 b wieder zur Konditionierung genutzt wird, wird der Sorptionswärmetauscher 11 b mit Hilfe des Kühlwassers wieder auf eine für die Adsorption benötige Temperatur gekühlt. In dieser Zeit wird der Sorptionswärmetauscher 11 b nicht von Luft durchströmt. Der Außenluftteilstrom A mit der aus dem Trocknungsmittel 12 aufgenommenen Feuchtigkeit wird als Fortluftstrom F fortgeführt (Zustand Z3). Die Gebäudeabluft Ab wird durch die befeuchtete Seite des indirekten Verdunstungskühlers 25 geführt (Zustand Z2), anschließend im Kühlturm zur Abkühlung des Kühlwassers genutzt und danach fort geführt (Zustand Z4).

Um diese beiden Betriebsmodi zu realisieren, umfasst die Sorptionswärmetauscheranlage 10 mehrere Klappen 31 und Ventile 32. Der Außenluftteilstrom A, welcher durch die beschichteten Sorptionswärmetauscher 11 geführt wird, wird während der Konditionierung dem indirekten Verdunstungskühler 25 zugeführt oder während der Regenerierung fort geführt. Dazu dienen die Klappen 31. Auch die mit Wasser durchströmte Seite der Sorptionswärmetauscher 11 ist an Ventile 32 angeschlossen sein, damit je nach Betriebszustand heißes oder kaltes Temperiermittel 21 oder 22 den Sorptionswärmetauscher 11 durchströmt.

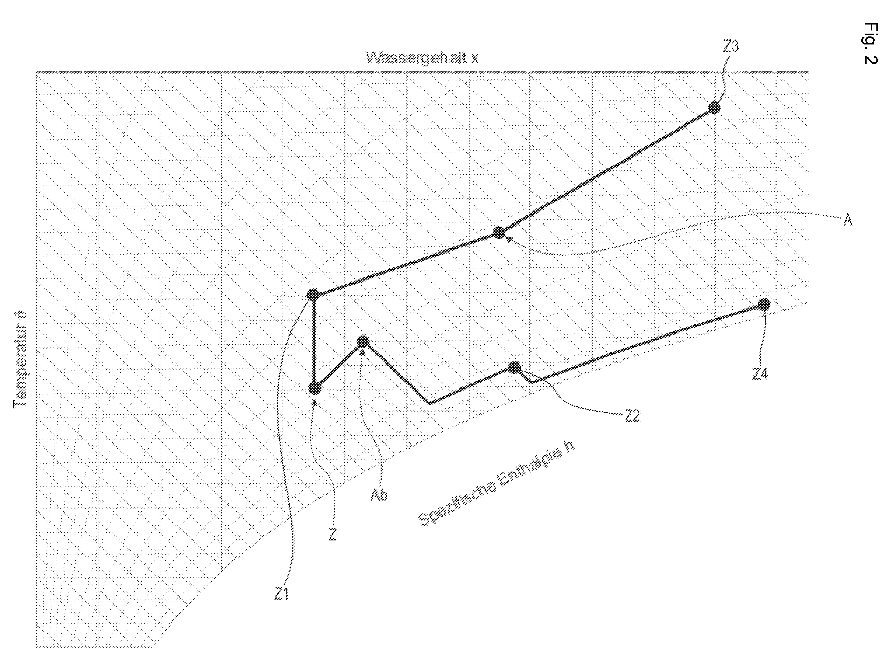

Die Fig. 2 zeigt ein qualitatives Mollier-h-x-Diagramm des erfindungsgemäßen Verfahrens. Allgemein sind mit einem h-x-Diagramm Zustandsänderungen feuchter Luft durch Erwärmung, Befeuchtung, Entfeuchtung, Kühlung und/oder Mischung verschiedener Luftmengen verdeutlichbar. Das h-x-Diagramm gilt für einen bestimmten Luftdruck (in der Regel 1 bar), also für isobare Zustandsänderungen. Die Größen Temperatur, Luftfeuchtigkeit und spezifische Enthalpie sind auf graphischem Wege bestimmbar. Auf der Abszisse ist der Wassergehalt aufgetragen und auf der Ordinate die Temperatur. Die Isenthalpen verlaufen parallel zueinander und schiefwinklig zur Ordinate.

Im h-x-Diagramm der Fig. 2 sind die vier Zustände Z1 bis Z4 des Verfahrens zum Betrieb der erfindungsgemäßen Sorptionswärmetauscheranlage 10 dargestellt. Die verschiedenen Luftströme A, Ab, Z und F sind ebenfalls gekennzeichnet.

Der Außenluftteilstrom A wird zum einen beim Durchlaufen des einen Sorptionswärmetauschers 11a im Konditionierungsmodus abgekühlt und entfeuchtet (gekennzeichnet durch die Linie nach Z1). Im anderen Sorptionswärmetauscher 11 b wird der Außenluftteilstrom A durch Aufnehmen der Feuchtigkeit des Trocknungsmittels 12 erwärmt, wobei sein Wassergehalt steigt (gekennzeichnet durch die Linie nach Z3). Der getrocknete und gekühlte Au-βenluftteilstrom A wird im indirekten Verdunstungskühler 25 ohne weitere Trocknung weiter gekühlt (gekennzeichnet durch die senkrechte Linie) und wird zum Zuluftstrom Z. Der Zuluftstrom Z durchströmt das zu temperierende Gebäude und wird zum Abluftstrom Ab. Der Abluftstrom Ab wird zuerst beim Durchströmen der befeuchteten Seite des indirekten Verdunstungskühlers 25 abgekühlt, wobei er Feuchtigkeit aufnimmt (gekennzeichnet durch Linie zu Zustand Z2). Anschließend wird der Abluftstrom Ab im Kühlturm zur Abkühlung des Kühlwassers genutzt, wobei er sich erwärmt und befeuchtet wird (gekennzeichnet durch Linie zu Z2) und danach als Fortluftstrom F fortgeführt wird.

## Patentansprüche

1. Verfahren zum Betrieb einer offenen Sorptionswärmetauscheranlage (10), insbesondere einer offenen Sorptionswärmetauscheranlage zur Konditionierung von Frischluft, mit mindestens zwei Sorptionswärmetauschern (11a, 11 b), wobei die Sorptionswärmetauscher (11) wechselweise in einem Konditionierungsbetriebsmodus und einem Regenerationsbetriebsmodus betrieben werden, um eine quasikontinuierliche Konditionierung eines Luftstroms durchzuführen, und der Luftstrom zumindest teilweise in Kontakt mit mindestens einem festen Trocknungsmittel (12) gebracht wird,
umfassend die Schritte:
• Kühlen eines ersten Sorptionswärmetauschers (11a) mittels eines in mindestens einem Kreislauf umgewälzten flüssigen Temperiermittels (21), wobei das Trocknungsmittel (12) gekühlt wird,
• Trocknen und Kühlen zumindest eines Außenluftteilstroms (A) in dem ersten Sorptionswärmetauscher (11a),
• Zuführen des getrockneten und gekühlten Außenluftteilstroms (A) als Zuluftstrom (Z) in eine zu klimatisierende Umgebung,
• weiteres Kühlen des Zuluftstroms (Z) mittels eines aus der zu klimatisierenden Umgebung abzuführenden Abluftstroms (Ab),
• Erwärmen eines zweiten Sorptionswärmetauschers (11 b) mittels eines in dem mindestens einen Kreislauf umgewälzten flüssigen Temperiermittels (22), wobei das Trocknungsmittel (12) erwärmt wird,
• Regenerieren des erwärmten zweiten Sorptionswärmetauschers (11 b), wobei ein durch die Erwärmung des Trocknungsmittels (12) freigesetzter Wasserdampf von einem Au-βenluftteilstrom (A) aufgenommen und als Fortluftstrom (F) fortgeführt wird, und
• Kühlen des Temperiermittels (21) in einem Nasskühlturm (23) mit Hilfe des Abluftstroms (Ab) oder eines weiteren Außenluftteilstroms,
wobei die Betriebsmodi der Sorptionswärmetauscher phasenweise wechseln.

2. Verfahren nach Anspruch 1,
**dadurch gekennzeichnet, dass** der Außenluftteilstrom (A) das feste Trocknungsmittel (12) anströmt, wobei der Außenluftteilstrom (A) seine Feuchtigkeit an das Trocknungsmittel (12) abgibt und/oder die Feuchtigkeit des Trocknungsmittels (12) aufnimmt.

3. Verfahren nach Anspruch 1 oder 2,
**dadurch gekennzeichnet, dass** der Außenluftteilstrom (A) und/oder das Trocknungsmittel (12) mittels mindestens eines flüssigen Temperiermittels (21,22) temperiert werden.

4. Verfahren nach einem der Ansprüche 1 bis 3,
**dadurch gekennzeichnet, dass** ein Sorptionswärmetauscher (11a, 11b) nach Abschluss des Regenerationsbetriebes und vor Beginn des Konditionierungsbetriebes in einer Zwischenkühlphase wieder auf ein für das Trocknen und Kühlen des Außenluftteilstroms benötigtes Temperaturniveau eingestellt wird, indem der von einem Temperiermittel gekühlte Sorptionswärmetauscher luftseitig nicht durchströmt wird.

5. Sorptionswärmetauscheranlage (10), insbesondere eine offene Sorptionswärmetauscheranlage zur Konditionierung von Frischluft, mit
mindestens zwei Sorptionswärmetauschern (11a, 11 b), wobei die Sorptionswärmetauscher (11a, 11 b) wechselweise in einem Konditionierungsmodus und einem Regenerationsmodus betrieben werden, um eine quasikontinuierliche Konditionierung eines Luftstroms durchzuführen, umfassend:
• ein festes Trocknungsmittel (12) zum Trocknen eines Luftstroms in den mindestens zwei Sorptionswärmetauschern (11a, 11 b),
• mindestens ein in mindestens einem Kreislauf umgewälztes flüssiges Temperiermittel (21, 22) zum Temperieren der Sorptionswärmetauscher und/oder eines Luftstroms und/oder des Trocknungsmittels (12), und
• einen Nasskühlturm (23) zum Kühlen des Temperiermittels (21) mit Hilfe des Abluftstroms (Ab) oder eines weiteren Außenluftteilstroms.

6. Sorptionswärmetauscheranlage (10) nach Anspruch 5,
**dadurch gekennzeichnet, dass** das mindestens eine feste Trocknungsmittel (12) als Beschichtung jeweils in zumindest einem Bereich der mindestens zwei Sorptionswärmetauscher (11a, 11b) ausgebildet ist.

7. Sorptionswärmetauscheranlage (10) nach Anspruch 5 oder 6,
**dadurch gekennzeichnet, dass** eine Temperiervorrichtung mit mindestens zwei Temperiermittelspeichervorrichtungen (24, 25) zum Bevorraten des mindestens einen Temperiermittels (21, 22) vorgesehen ist, um mindestens zwei unterschiedliche Temperaturen (T1, T2) bereitzustellen.

8. Sorptionswärmetauscheranlage (10) nach einem der Ansprüche 5 bis 7,
**dadurch gekennzeichnet, dass** der Sorptionswärmetauscher (11a, 11b) einen mit festem Trocknungsmittel (12) beschichteten Strömungskanal für die Durchleitung des Außenluftteilstroms (A), einen Strömungskanal für die Durchleitung mindestens eines ersten Temperiermittels (21) sowie optional einen Strömungskanal für die Durchleitung eines zweiten Temperiermittels (22) umfasst, wobei die Strömungskanäle in wärmeleitender Verbindung miteinander stehen.

9. Sorptionswärmetauscheranlage (10) nach einem der Ansprüche 5 bis 8,
**dadurch gekennzeichnet, dass** das mindestens eine flüssige Temperiermittel (21, 22) Wasser oder eine Wasser-Glykol-Mischung umfasst.

10. Sorptionswärmetauscheranlage (10) nach einem der Ansprüche 5 bis 9,
**dadurch gekennzeichnet, dass** ein indirekter Verdunstungskühler (25) zum weiteren Abkühlen des Zuluftstroms (Z) durch einen Abluftstrom (Ab) vorgesehen ist.

11. Sorptionswärmetauscheranlage (10) nach einem der Ansprüche 5 bis 10,
**dadurch gekennzeichnet, dass** eine Umschaltvorrichtung (30) vorgesehen ist, um die Luft- und/oder Wasserströme zwischen den Sorptionswärmetauschern (11a, 11b) abwechselnd umzuschalten.
